# EUROPÄISCHE PATENTANMELDUNG

(11) **EP 2 298 710 A1**
(43) Veröffentlichungstag der Anmeldung: **23.03.2011**
(21) Anmeldenummer: 09170854.5
(22) Anmeldetag: 21.09.2009
(51) Int. Cl.: C04B 24/18, C04B 7/52, C04B 28/02

(54) **Zusatzmittel für mineralische Bindemittel**

(71) Anmelder: Sika Technology AG, 6340 Baar (CH)
(72) Erfinder: Hurley, Colin, Chesham HP5 2JF Buckinghamshire (GB); Schrabback, Jörg M., 69242 Mühlhausen (DE); Heller, Thomas, 69226 Nussloch (DE); Honert, dieter, 69234 Dielheim (DE)
(74) Vertreter: Sika Patent Attorneys

(57) **Zusammenfassung**

Die vorliegende Erfindung betrifft die Verwendung einer Zusatzmittelzusammensetzung Z umfassend mindestens ein Ligninsulfonat zur Verminderung des Aufschwimmens von Russ auf mineralischen Bindemitteln. Zusätzlich betrifft die Erfindung Verfahren zur Verminderung des Aufschwimmens von Russ auf mineralischen Bindemitteln.

## Beschreibung

### Technisches Gebiet

Die Erfindung betrifft das Gebiet der Zusatzmittel im Mahl- und Mischprozess von hydraulischen Bindemitteln und/oder latent hydraulischen Bindemitteln.

### Stand der Technik

Die Herstellung von Zement ist sehr energieaufwändig und verursacht eine grosse Kohlendioxidemission. Durch die Verwendung von Aschen wie beispielsweise Flugasche, Silica fume oder Reisschalenasche als Zusatzmittel bei der Herstellung von mineralischen Bindemitteln kann Zement eingespart werden, was sowohl aus Sicht des Energieverbrauchs als auch aus Gründen des Umweltschutzes vorteilhaft ist. Erwähnte Aschen haben jedoch den Nachteil, dass sie Russ enthalten, welcher auf mineralischen Bindemitteln, insbesondere auf wässrigen hydraulisch abbindenden Bindemitteln, aufschwimmen kann, was zu unansehnlichen Oberflächen und Schäden, beispielsweise durch Haftungsverlust von an solchen Oberflächen angebrachten Beschichtungen, führen kann.

Ein zentraler Schritt in der Zementherstellung ist das Mahlen des Zementklinkers. Da Zementklinker sehr hart sind, ist das Zerkleinern sehr energieaufwändig. Für die Eigenschaften des Zementes ist es wichtig, dass er als feines Pulver vorliegt. Deshalb ist die Feinheit des Zementes ein wichtiges Qualitätsmerkmal. Um das Zerkleinern in Pulverform zu erleichtern werden sogenannte Zementmahlhilfsmittel eingesetzt. Dadurch werden die Mahlzeiten und Energiekosten stark reduziert.

Einige Zementmahlhilfsmittel haben den Nachteil, dass sie ab einer gewissen Menge verflüssigenden Eigenschaften für hydraulische Bindemittel aufweisen, beispielsweise werden durch Entflockung Feststoffpartikel einzeln verteilt und beweglicher, wodurch es zu einer Erniedrigung der Fliessgrenze, das heisst zu einer Viskositätsreduzierung kommt. Dies fördert insbesondere das Aufschwimmen von Russ und verstärkt dadurch das Problem weiter.

### Darstellung der Erfindung

Der vorliegenden Erfindung lag daher die Aufgabe zugrunde, neue Zusatzmittel für den Mahl- und Mischprozess von hydraulischen Bindemittel und/oder latent hydraulischen Bindemitteln zur Verfügung zu stellen, welche die genannten Nachteile des Standes der Technik nicht aufweisen, sondern gute suspensionsstabilisierende Eigenschaften besitzen, insbesondere das Aufschwimmen von Russ verhindern.

Überraschenderweise wurde nun gefunden, dass eine Zusatzmittelzusammensetzung **Z** umfassend mindestens ein Ligninsulfonat zur Verminderung des Aufschwimmens von Russ in mineralischen Bindemitteln eingesetzt werden kann. Weiterhin wurde überraschenderweise gefunden, dass durch die Kombination der Zusatzmittelzusammensetzung **Z** umfassend mindestens ein Ligninsulfonat mit den üblichen Zementmahlhilfsmitteln die Nachteile der bekannten Mahlhilfsmittel aufgehoben, beziehungsweise stark reduziert, werden können, ohne dass die vorteilhaften Wirkungen der üblichen Zementmahlhilfsmittel verloren gehen.

Überraschenderweise hat sich weiter gezeigt, dass die Zugabe von Zusatzmittelzusammensetzung **Z** keinen negativen Einfluss auf die Effizienz des Mahlprozesses hat.

Weiter wurde überraschenderweise gefunden, dass die Zugabe von Zusatzmittelzusammensetzung **Z** keinen negativen Einfluss auf die Druckfestigkeit des abgebundenen mineralischen Bindemittels hat.

### Wege zur Ausführung der Erfindung

Die vorliegende Erfindung betrifft die Verwendung einer Zusatzmittelzusammensetzung **Z** umfassend mindestens ein Ligninsulfonat zur Verminderung des Aufschwimmens von Russ auf mineralischen Bindemitteln.

Bei den mineralischen Bindemitteln handelt es sich um hydraulische Bindemittel und/oder latent hydraulische Bindemittel und/oder puzzolanische Bindemittel. Unter dem Begriff hydraulische Bindemittel werden im vorliegenden Dokument Bindemittel verstanden, die auch unter Wasser abbinden, respektive erhärten, wie beispielsweise hydraulischer Kalk oder Zement. Unter dem Begriff latent hydraulische Bindemittel werden im vorliegenden Dokument Bindemittel verstanden, die erst durch Einwirkung von Zusätzen (Anregern) abbinden, respektive erhärten, wie beispielsweise Hüttensand. Unter dem Begriff puzzolanische Bindemittel werden im vorliegenden Dokument Bindemittel verstanden, die nicht selbstständig abbinden sondern nach Feuchtlagerung durch Bindung von Calciumhydroxid festigkeitsbildende Reaktionsprodukte liefern, wie beispielsweise Flugasche, Silica fume, sowie natürliche Puzzolane, wie z. B. Trass.

Die hydraulischen Bindemittel und/oder latent hydraulischen Bindemittel und/oder puzzolanische Bindemittel sind typischerweise ausgewählt aus der Gruppe bestehend aus Zement, Flugaschen, Silica fume, Trass, Reisschalenasche und Hüttensand; oder Mischungen daraus.

Bevorzugt ist mindestens ein weiterer Bestandteil des mineralischen Bindemittels ausgewählt aus der Gruppe bestehend aus Flugasche, Silica fume, Hüttensand, Trass und Reisschalenasche.

Flugasche, Silica fume, Hüttensand, Trass und Reisschalenasche werden insbesondere als sogenannte Hauptbestandteile im Zement eingesetzt und enthalten unverbrannten Restkohlenstoff, Russ, welcher auf einem mineralischen Bindemittel, insbesondere einem wässrigen mineralischen Bindemittel, aufschwimmen kann. Dies führt zu unansehnlichen Oberflächen und Schäden, beispielsweise durch Haftungsverlust von an solchen Oberflächen angebrachten Beschichtungen. Das Aufschwimmen von Russ auf einem wässrigen mineralischen Bindemittel, beispielsweise Beton, kann insbesondere auf der Oberfläche zur Bildung von Stippen und Russnestern führen. Diese sind unansehnlich und können durch Staubbildung zur Abgabe des Russes an die Umwelt führen. Da es sich bei dem Russ typischerweise um ein ungewolltes Nebenprodukt einer Verbrennung mit einer erhöhten Menge an gesundheitsschädlichen polyzyklischen aromatischen Kohlenwasserstoffen handelt, ist dies weiter nachteilig.

Flugaschen sind ein Verbrennungsrückstand aus Kohlekraftwerken. Die feinkörnigen Verbrennungsrückstände des Kohlenstaubes werden im Kraftwerk mit Hilfe von Elektrofiltern dem Rauchgas entzogen (Filterstäube). Flugasche kann sowohl bei der Zementherstellung als Rohstoffkomponente, als Hauptbestandteil des Zements, als auch als Betonzusatzstoff eingesetzt werden. Bei Flugasche ist nach DIN EN 196-2 der Glühverlust, der den Gehalt an unverbrannten, porösen Kohlenstoffpartikeln (Russ) kennzeichnet, auf 5 Gewichts-% begrenzt. Die Zusammensetzung der Flugaschen wird durch Art und Herkunft der Kohle sowie durch die Verbrennungsbedingungen beeinflusst.

Beispielsweise kann der Anteil an Flugasche nach DIN EN 197-1 in einem CEM II Portlandflugaschezement 6-35 Gewichts-%, bezogen auf das Gesamtgewicht des Portlandflugaschezements, betragen.

Silica fume, (auch Silicastaub oder Mikrosilica genannt) fällt als Nebenprodukt bei der Herstellung von Silicium und Siliciumlegierungen in elektrischen Lichtbogenöfen in der Abgasreinigung an. Silica fume weist typischerweise einen Glühverlust von weniger als 3 Gewichts-% auf.

Beispielsweise kann der Anteil an Silica fume nach DIN EN 197-1 in einem CEM II Portlandsilicastaubzement 6-10 Gewichts-%, bezogen auf das Gesamtgewicht des Portlandsilicastaubzements, betragen.

Reisschalenasche (rice husk ash) entsteht durch Verbrennung der in vielen Ländern als Abfallprodukt anfallenden Reisschalen, typischerweise bei Temperaturen über 700 °C, und anschliessendem Mahlen. Der Glühverlust beträgt typischerweise zwischen 2-10 Gewichts-%. Reisschalenasche wird insbesondere in reisproduzierenden Ländern als Puzzolan dem Zement beigegeben.

Der Baustoff Trass (gemahlener vulkanischer Tuffstein) ist beispielsweise genormt nach DIN 51043. Trass gehört zu den vulkanischen Gläsern und besteht überwiegend aus Kieselsäure, Tonerde sowie chemisch und physikalisch gebundenem Wasser.

Bei der Produktion von Roheisen entsteht aus Gangart, Koksasche und Zuschlägen als Nebenprodukt Hochofenschlacke, welche zu Hüttensand weiterverarbeitet werden kann und als latent hydraulisches Bindemittel verwendet wird. Hochofenschlacke, respektive Hüttensande, enthalten im allgemeinen Russ aus unverbrannten Anteilen der Koksasche.

Beispielsweise kann der Anteil an Hüttensand nach DIN EN 197-1 in einem CEM II Portlandhüttenzement 6-35 Gewichts-%, bezogen auf das Gesamtgewicht des Portlandhüttenzements, betragen.

Unter dem Begriff "Russ" wird im vorliegenden Dokument eine Erscheinungsform des Kohlenstoffs verstanden, die sich bei unvollständiger Verbrennung bzw. thermischer Spaltung von dampfförmigen Kohlenstoffhaltigen Substanzen bildet. Der Russ in der hydraulisch abbindenden Zusammensetzung ist vorzugsweise Bestandteil mindestens einer der vorangehend genannten weiteren Bestandteile der hydraulisch abbindenden Zusammensetzung ausgewählt aus der Gruppe bestehend aus Flugasche, Silica fume, Hüttensande, Trass und Reisschalenasche.

Typischerweise beträgt der Gewichtsanteil des Russes 0.05 - 1.75 Gewichts-%, insbesondere 0.1 - 1 Gewichts-%, bezogen auf das Gewicht des mineralischen Bindemittels.

Der bevorzugte Russ entsteht typischerweise als ungewolltes Nebenprodukt und enthält hohe Mengen von in organischen Lösungsmitteln, wie beispielsweise Dichlormethane- und Toluol, extrahierbaren Materialien, wie beispielsweise polyzyklische aromatische Kohlenwasserstoffe, wovon zahlreiche krebserregende Eigenschaften haben. Weiter weist der bevorzugte Russ einen Kohlenstoffgehalt von weniger als 90%, typischerweise von weniger als 70% auf. Die mittlere Partikelgrösse beträgt im Allgemeinen 50 - 200 µm, insbesondere 70-150 µm, bevorzugt 90 - 120 µm. Die spezifische Oberfläche (BET-Oberfläche, nach DIN 66 131) beträgt typischerweise 1 - 20 m²/g, insbesondere 5-15 m²/g.

Der bevorzugte Russ unterscheidet sich chemisch und physikalisch vom Industrieruss, englisch carbon black, welcher durch unvollständige Verbrennung oder Pyrolyse von Kohlenwasserstoffen hergestellt wird.

Die Herstellung von Industrieruss unterliegt genauer Prozessführung, insbesondere in Bezug auf Druck und Temperatur, um die gewünschten Eigenschaften gezielt zu erzeugen. Industrieruss weist typischerweise einen Kohlenstoffgehalt von über 97% auf, einen sehr geringen Gehalt von polyzyklischen aromatischen Kohlenwasserstoffen und die Partikel sind traubenförmig ausgebildet. Die mittlere Partikelgrösse beträgt im Allgemeinen 0.02 - 2 µm, und die BET-Oberfläche beträgt typischerweise 25 - 300 m²/g.

Industrieruss findet beispielsweise als Farbstoff (Pigment) Verwendung. Für die Verwendung als Farbstoffe kann der Industrieruss zusätzlich einer Oxidation unterzogen werden, wodurch sich eine bessere Benetzung mit Bindemitteln ergibt.

Erwähnter Industrieruss findet in hydraulisch abbindenden Zusatzmitteln auch als Pigmente zum Einfärben von Beton Verwendung. Die üblichen Dosierungen von Pigmenten liegen bei etwa 3 - 5 Gewichts-%, bezogen auf den Zement. Wegen möglicher Probleme bei der Pigmentdosierung werden Pigmente selten als feines Pulver, sondern als wässrige Pigmentpräparation (Slurry) oder Pigmentgranulate, die sich beim Mischen des hydraulisch abbindenden Zusatzmittels auflösen, geliefert.

Die Zusatzmittelzusammensetzung **Z** kann als schüttfähige Zusammensetzung vorliegen, beispielsweise als Pulver, oder als flüssige Zusammensetzung, beispielsweise als wässrige Zusammensetzung.

Die Zusatzmittelzusammensetzung **Z** kann weitere Bestandteile enthalten. Beispiels hierfür sind Lösungsmittel oder Additive, wie sie in der Betontechnologie geläufig sind, insbesondere oberflächenaktive Stoffe, Stabilisatoren gegen Hitze und Licht, Farbstoffe, Entschäumer, Verzögerer, Korrosionsinhibitoren, Luftporenbilder.

Ligninsulfonate werden aus Lignin dargestellt, das wiederum in Pflanzen, speziell holzigen Pflanzen, durch Polymerisation aus drei Arten von Phenylpropanol-Monomeren entsteht: A) 3-(4-Hydroxyphenyl)-2-propen-1-ol (p-Cumarylalkohol), B) 3-(3-methoxy-4-hydroxyphenyl)-2-propen-1-ol (Coniferylalkohol), C) 3-(3,5-dimethoxy-4-hydroxyphenyl)-2-propen-1-ol (Sinapylalkohol).

Der erste Schritt im Aufbau der makromolekularen Ligninstruktur besteht in enzymatischer Dehydrierung dieser Monomere, wobei Phenoxylradikale entstehen. Zufällige Kopplungsreaktionen zwischen diesen Radikalen führen zu einem dreidimensionalen, amorphen Polymer, das im Gegensatz zu den meisten anderen Biopolymeren keine regelmässig geordneten oder wiederholten Einheiten aufweist. Aus diesem Grund kann keine definierte Ligninstruktur genannt werden, obwohl diverse Modelle für eine "durchschnittliche" Struktur vorgeschlagen worden sind. Da die Monomere des Lignins neun Kohlenstoffatome enthalten, werden die Analysedaten oft in C9-Formeln ausgedrückt, z.B. C9H8.3O2.7(OCH3)0.97 für Lignin aus Picea abies, und C9H8.7O2.9(OCH3)1.58 für Lignin aus Eucalyptus regnans.

Die Uneinheitlichkeit des Lignins zwischen Pflanzen verschiedener Taxa, ebenso wie zwischen den verschiedenen Geweben, Zellen und Zellwandschichten einer jeden Spezies, ist dem Fachmann geläufig.

Das chemische Verhalten des Lignins wird hauptsächlich durch die Gegenwart phenolischer, benzylischer und carbonylischer Hydroxylgruppen bestimmt, deren Häufigkeit in Abhängigkeit von den oben genannten Faktoren und dem Isolationsverfahren schwanken kann.

Ligninsulfonate entstehen als Nebenprodukte der Zellstoffherstellung unter dem Einfluss schwefliger Säure, die Sulfonierung und ein gewisses Mass an Demethylierung der Lignine bewirkt. Wie die Lignine sind sie in Struktur und Zusammensetzung vielfältig. In Wasser sind sie im gesamten pH-Bereich löslich, in Ethanol, Azeton und anderen gängigen organischen Lösungsmitteln hingegen unlöslich

Ligninsulfonate sind nur wenig oberflächenaktiv. Sie haben nur eine geringe Neigung, die Zwischenflächenspannung zwischen Flüssigkeiten zu verringern, und eignen sich nicht zur Verringerung der Oberflächenspannung des Wassers oder zur Micellenbildung. Als Dispersionsmittel können sie durch Adsorption/Desorption und Ladungsbildung an Substraten fungieren. Ihre Oberflächenaktivität kann jedoch durch Einfügen langkettiger Alkylamine in die Ligninstruktur gesteigert werden.

Methoden zur Isolation und Reinigung von Ligninsulfonaten sind dem Fachmann geläufig. Beim Howard-Verfahren werden Calciumligninsulfonate durch Zusatz eines Überschusses an Kalk zu verbrauchter Sulfitablaugung gefällt. Ligninsulfonate können auch durch Bildung unlöslicher quaternärer Ammoniumsalze mit langkettigen Aminen isoliert werden. Im Industriemassstab können Ultrafiltration and lonenaustauschchromatographie zur Aufreinigung von Ligninsulfonaten verwendet werden.

Erfindungsgemäss verwendbare Ligninsulfonat-Serien sind unter verschiedenen Handelsnamen kommerziell erhältlich, wie z.B. Ameri-Bond, Borresperse (Borregaard), Dynasperse, Kelig, Lignosol, Marasperse, Norlig (Daishowa Chemicals), Lignosite (Georgia Pacific), Reax (MEAD Westvaco), Wafolin, Wafex, Wargotan, Wanin, Wargonin (Holmens), Vanillex (Nippon Paper), Vanisperse, Vanicell, Ultrazine, Ufoxane (Borregaard), Serla-Bondex, Serla-Con, Serla-Pon, Serla-Sol (Serlachius), Collex, Zewa (Wadhof-Holmes), Raylig (ITT Rayonier).

Der Begriff "Ligninsulfonat" steht hier für ein Salz, das sich aus Ligninsulfonat-Anionen und geeigneten Kationen zusammensetzt.

Selbstverständlich können auch Gemische verschiedener Ligninsulfonate eingesetzt werden, ferner können die Ligninsulfonate sowohl in flüssiger als auch in fester Form vorliegen.

In einer bevorzugten Ausführungsform der Erfindung umfasst das mineralische Bindemittel gemahlenen Zementklinker, bei dessen Mahlen zu Zement Zusatzmittelzusammensetzung **Z** anwesend war.

Es ist vorteilhaft, wenn die Zusatzmittelzusammensetzung **Z** dem Zementklinker vor und/oder während dem Mahlvorgang so zugegeben wird, dass der Anteil an Ligninsulfonat der Zusatzmittelzusammensetzung **Z** 0.001 - 1.5 Gew.-%, insbesondere zwischen 0.005 und 0.2 Gew.-%, bevorzugt zwischen 0.005 und 0.08 Gew.-%, bezogen auf den zu mahlenden Zementklinker, beträgt.

Unter dem Begriff "Zementklinker" werden im vorliegenden Dokument die, typischerweise etwa nussgroßen, Körper verstanden, die beim Erhitzen der Kalk-Ton-Gemische auf 1250-1500°C entstehen und beim Zermahlen Zement ergeben.

Es hat sich unter anderem gezeigt, dass bereits bedeutend kleinere Konzentrationen an Ligninsulfonat in Bezug auf den Zementklinker wirkungsvoll zur Verminderung des Aufschwimmens von Russ in mineralischen Bindemitteln, umfassend mit Zusatzmittelzusammensetzung **Z** gemahlenen Zementklinker, eingesetzt werden können, als das Ligninsulfonat bekanntermassen, d.h. typischerweise 0.2 - 1.5 Gewichts-%, bezogen auf das Gewicht des mineralischen Bindemittels, als Verflüssiger-Zusatzmittel dem mineralischen Bindemitteln zugesetzt werden oder als das Ligninsulfonat bekanntermassen, d.h. typischerweise 0.2 - 1.5 Gewichts-%, bezogen auf das Gewicht des zu mahlenden Zementklinker, als Mahlhilfsmittel dem zu mahlenden Zementklinker zugesetzt werden.

Der Mahlprozess erfolgt üblicherweise in einer Zementmühle. Es können aber grundsätzlich auch andere Mühlen, wie sie in der Zementindustrie bekannt sind, eingesetzt werden. Je nach Mahldauer verfügt der Zement über unterschiedliche Feinheit. Die Feinheit von Zement wird typischerweise nach Blaine in cm²/g angegeben. Andererseits ist für die Feinheit auch die Partikelgrössenverteilung von Praxisrelevanz. Solche Partikelgrössenanalysen werden üblicherweise durch Lasergranulometrie oder Luftstrahlsiebe ermittelt.

Der derart gemahlene Zement findet wie jeder anders gemahlene Zement eine breite Anwendung in Beton, Mörteln, Vergussmassen, Injektionen oder Putzen.

Wird Zusatzmittelzusammensetzung **Z** dem Zement vor und/oder während dem Mahlen des Zementklinkers zugeben, wird nach dessen Abmischung mit Wasser, das heisst im wässrigen mineralischen Bindemittel, insbesondere im Beton, eine Verminderung des Aufschwimmens von Russ auf dem wässrigen mineralischen Bindemittel ersichtlich. Somit ist gemäss dieser Ausführungsform kein nachträgliches Zumischen von Zusatzmittelzusammensetzung **Z** mehr nötig und spart deshalb einen Arbeitsgang beim Anwender des Zementes. Ein derartiger Zement stellt daher ein "ready-to-use"- Produkt dar, welches in grossen Mengen hergestellt werden kann. Es hat sich gezeigt, dass die Fähigkeit der Zusatzmittelzusammensetzung **Z**, das Aufschwimmens von Russ auf einem, insbesondere wässrigen, mineralischen Bindemittel zu Vermindern, durch den Mahlvorgang nicht beeinträchtigt wird.

Überraschenderweise hat sich weiter gezeigt, dass die Zugabe von Zusatzmittelzusammensetzung **Z** keinen negativen Einfluss auf die Effizienz des Mahlprozesses hat.

Überraschenderweise hat sich auch gezeigt, dass durch die Zugabe von Zusatzmittelzusammensetzung **Z** die Wirkung von Mahlhilfsmitteln beim Mahlprozess nicht beeinträchtigt wurde.

Überraschenderweise wurde weiter gefunden, dass es für die Verminderung des Aufschwimmens von Russ auf dem wässrigen mineralischen Bindemittel zuträglich ist, das Ligninsulfonat getrennt vom eventuell vorhandenen Mahlhilfsmittel dem mineralischen Bindemittel zuzugeben.

Es ist daher weiter vorteilhaft, dass die Zusatzmittelzusammensetzung **Z** mindestens ein Zementmahlhilfsmittel aufweist. Geeignet als Mahlhilfmittel sind alle dem Fachmann bekannten Mahlhilfsmittel. Das mindestens eine Zementmahlhilfsmittel ist insbesondere ausgewählt aus der Gruppe bestehend aus Glykole, organische Amine, Ammoniumsalze von organischen Aminen mit Carbonsäuren und Kammpolymere.

Unter dem Begriff "Kammpolymer" wird im vorliegenden Dokument ein Kammpolymer bestehend aus einer linearen Polymerkette (=Hauptkette), an welcher über Ester- oder Ethergruppen Seitenketten angebunden sind, verstanden. Die Seitenketten bilden hierbei bildlich gesprochen die "Zähne" eines "Kamms".

Bevorzugt handelt es sich bei dem Kammpolymer um ein Kammpolymer **KP** mit über Ester- oder Ethergruppen an die Hauptkette angebunden Seitenketten.

Als Kammpolymer **KP** geeignet sind einerseits Kammpolymere mit über Ethergruppen an das lineare Polymergerüst gebundenen Seitenketten.

Über Ethergruppen an das lineare Polymergerüst gebundene Seitenketten können durch Polymerisation von Vinylethern oder Allylethern eingeführt werden.

Derartige Kammpolymere sind beispielsweise in WO 2006/133933 A2 beschrieben, deren Inhalt hiermit insbesondere durch Bezugnahme eingeschlossen wird, offenbart sind. Die Vinylether oder Allylether weisen insbesondere die Formel (II) auf.

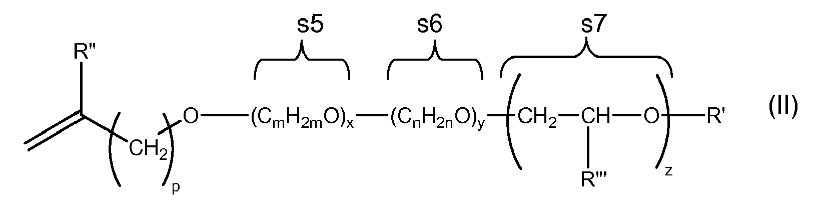

Hierbei steht R' für H oder für einen aliphatischen Kohlenwasserstoffrest mit 1 bis 20 C-Atomen oder einen cycloaliphatischen Kohlenwasserstoffrest mit 5 bis 8 C-Atomen oder ein, gegebenenfalls substituierter, Arylrest mit 6 bis 14 C-Atomen. R" steht für H oder für eine Methylgruppe und R"' steht für einen unsubstituierten oder substituierten Arylrest, insbesondere für einen Phenylrest.

Weiterhin stehen p für 0 oder 1; m und n unabhängig voneinander je für 2, 3 oder 4; und x und y und z unabhängig voneinander je für Werte aus dem Bereich von 0 bis 350.

Die Abfolge der in Formel (II) als s5, s6 und s7 bezeichneten Teilstrukturelemente kann hierbei alternierend, blockartig oder zufällig angeordnet sein.

Insbesondere sind derartige Kammpolymere Copolymerisate von Vinylether oder Allylether mit Maleinsäureanhydrid, Maleinsäure, und/oder (Meth)acrylsäure.

Als Kammpolymer **KP** geeignet sind andererseits Kammpolymere mit über Estergruppen an das lineare Polymergerüst gebundenen Seitenketten. Diese Art von Kammpolymeren **KP** ist gegenüber den Kammpolymeren mit über Ethergruppen an das lineare Polymergerüst gebundenen Seitenketten bevorzugt.

Besonders bevorzugte Kammpolymere **KP** sind Copolymere der Formel (I).

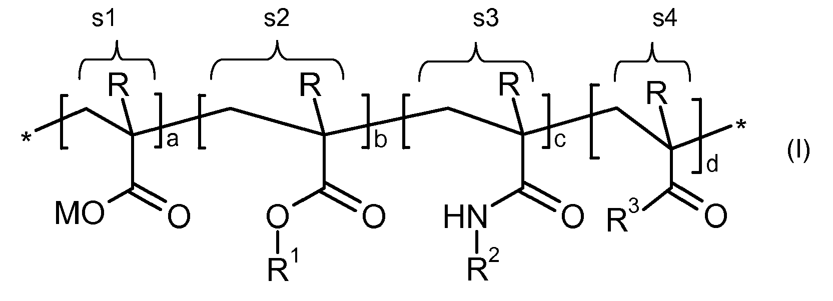

Hierbei stehen M unabhängig voneinander für H⁺, Alkalimetallion, Erdalkalimetallion, zwei- oder dreiwertiges Metallion, Ammoniumion, oder organische Ammoniumgruppe. Der Term "unabhängig voneinander" bedeutet im vorliegenden Dokument jeweils, dass ein Substituent unterschiedliche zur Verfügung stehenden Bedeutungen in demselben Molekül aufweisen kann. So kann beispielsweise das Copolymer der Formel (I) gleichzeitig Carbonsäuregruppen und Natriumcarboxylatgruppen aufweisen, das heisst, dass für M in diesem Falle H⁺ und Na⁺ unabhängig voneinander bedeuten.

Dem Fachmann ist klar, dass es sich einerseits um ein Carboxylat handelt, an welches das Ion M gebunden ist, und dass andererseits bei mehrwertigen Ionen M die Ladung durch Gegenionen ausgeglichen sein muss.

Weiterhin stehen die Substituenten R unabhängig voneinander für Wasserstoff oder für eine Methylgruppe.

Des Weiteren stehen die Substituenten R¹ unabhängig voneinander für -[AO]q-R⁴. Die Substituenten R² stehen unabhängig voneinander für eine C₁-bis C₂₀-Alkylgruppe, -Cycloalkylgruppe, -Alkylarylgruppe oder für -[AO]q-R⁴. Der Substituent A steht in beiden Fälle unabhängig voneinander für eine C₂-bis C₄-Alkylengruppe und R⁴ für eine C₁- bis C₂₀-Alkylgruppe, -Cyclohexylgruppe oder -Alkylarylgruppe, während q einen Wert von 2 bis 250, insbesondere von 8 bis 200, besonders bevorzugt von 11 bis 150, darstellt.

Des Weiteren stehen die Substituenten R³ unabhängig voneinander für -NH₂, -NR⁵R⁶, -OR⁷NR⁸R⁹. Hierbei stehen R⁵ und R⁶ unabhängig voneinander für eine C₁- bis C₂₀-Alkylgruppe, -Cycloalkylgruppe oder -Alkylarylgruppe oder -Arylgruppe oder für eine Hydroxyalkylgruppe oder für eine Acetoxyethyl-(CH₃-CO-O-CH₂-CH₂-) oder eine Hydroxy-isopropyl- (HO-CH(CH₃)-CH₂-) oder eine Acetoxyisopropylgruppe (CH₃-CO-O-CH(CH₃)-CH₂-), oder R⁵ und R⁶ bilden zusammen einen Ring, von dem der Stickstoff ein Teil ist, um einen Morpholin- oder Imidazolinring aufzubauen.

Weiterhin stehen die Substituenten R⁸ und R⁹ je unabhängig voneinander für eine C₁- bis C₂₀-Alkylgruppe, -Cycloalkylgruppe, -Alkylarygruppe, -Arylgruppe oder für eine Hydroxyalkylgruppe.

Die Abfolge der in Formel (I) als s1, s2, s3 und s4 bezeichneten Teilstrukturelemente kann hierbei alternierend, blockartig oder zufällig angeordnet sein.

Schliesslich stellen die Indizes a, b, c und d Molverhältnisse der Struktureinheiten s1, s2, s3 und s4 dar. Diese Strukturelemente stehen in einem Verhältnis von

| | |
|---|---|
| | a/b/c/d = (0.1 - 0.9) / (0.1 - 0.9) / (0 - 0.8) / (0 - 0.3), |
| insbesondere | a/b/c/d = (0.1 - 0.9) / (0.1 - 0.9) / (0 - 0.5) / (0-0.1), |
| bevorzugt | a/b/c/d = (0.1 - 0.9) / (0.1 - 0.9) / (0 - 0.3) / (0 - 0.06), |

zueinander, mit der Massgabe, dass a + b + c + d = 1 ist. Die Summe c + d ist bevorzugt grösser als 0.

Die Herstellung des Kammpolymeren **KP** der Formel (I) kann einerseits durch radikalische Polymerisation der entsprechenden Monomere der Formel (IIIₐ), (III_{b}), (III_{c}) bzw. (III_{d}), welche dann zu den Strukturelementen Struktureinheiten s1, s2, s3 und s4 führen, 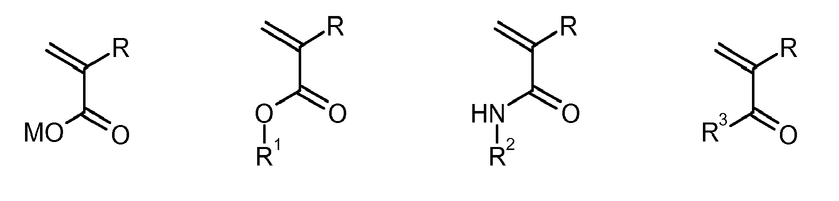 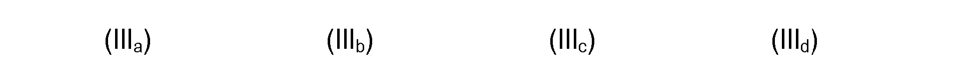 oder andererseits durch eine sogenannte polymer-analoge Umsetzung einer Polycarbonsäure der Formel (IV) erfolgen

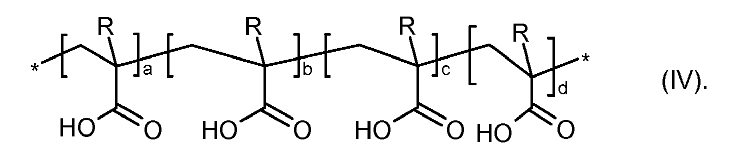

In der polymer-analogen Umsetzung wird die Polycarbonsäure der Formel (IV) mit den korrespondierenden Alkoholen, Aminen verestert oder amidiert und dann allenfalls neutralisiert oder teilneutralisiert (je nach Art des Rest M z.B. mit Metallhydroxiden oder Ammoniak). Details zur polymer-analogen Umsetzung sind offenbart beispielsweise in EP 1 138 697 B1 auf Seite 7 Zeile 20 bis Seite 8 Zeile 50, sowie in dessen Beispielen oder in EP 1 061 089 B1 auf Seite 4, Zeile 54 bis Seite 5 Zeile 38 sowie in dessen den Beispielen. In einer Abart davon, wie sie in EP 1 348 729 A1 auf Seite 3 bis Seite 5 sowie in dessen Beispielen beschrieben sind, kann das Kammpolymer **KP** der Formel (I) in festem Aggregatszustand hergestellt werden. Die Offenbarung dieser gerade genannten Patentschriften wird hiermit insbesondere durch Bezugnahme eingeschlossen.

Es hat sich erwiesen, dass eine besonders bevorzugte Ausführungsform der Kammpolymere **KP** der Formel (I) diejenigen sind, in welchen c+d > 0, insbesondere d > 0, sind. Als Rest R³ hat sich insbesondere -NH-CH₂-CH₂-OH als besonderes vorteilhaft erwiesen.

Als besonders vorteilhaft erwiesen haben sich Kammpolymere **KP,** wie sie von Sika Schweiz AG unter der Handelsnamenreihe ViscoCrete® kommerziell vertrieben werden.

Als Glykole sind insbesondere Alkylenglykole geeignet, vor allem der Formel OH-(CH₂-CH₂O)ᵤ-CH₂CH₂-OH mit u = 0 - 20, insbesondere 0, 1, 2 oder 3.

Als mögliche Glykole sind Glykole geeignet, welche ausgewählt sind aus der Liste bestehend aus Ethylenglykol, Propylenglykol, Polyethylenglykol, Polypropylenglykol, Diethylenglykol, Triethylenglykol, Dipropylenglykol, Tripropylenglykol, Reaktionsprodukte aus Ethylen- und Propylenoxid, Reaktionsprodukte aus Polypropylenglykol mit Verbindungen mit aktivem basischem Wasserstoff (Polyalkohole, Polycarbonsäuren, Polyamine, oder Polyphenole), Neopentylglykol, Pentandiol, Butandiol und ungesättigte Diole, sowie Mischungen davon und deren Derivate.

Besonders bevorzugte Glykole sind Mono-, Di- und Polyglykole aus Ethylen und Propylen, sowie Mischungen davon, denn sie sind kostengünstig und gut wasserlöslich.

Als organische Amine sind insbesondere Alkanolamine, vor allem Trialkanolamine geeignet, bevorzugt Triisopropanolamin (TIPA) oder Triethanolamin (TEA) sowie Mischungen davon.

Die Zusatzmittelzusammensetzung **Z**, umfassend mindestens ein Ligninsulfonat, kann bei einer weiteren erfindungsgemässen Verwendung dem mineralischen Bindemittel auch nach dem Mahlen des Zementklinkers zugegeben werden.

Dies ist dahingehend von Vorteil, dass dadurch das Aufschwimmen von Russ auf mineralischen Bindemitteln, insbesondere wässrigen mineralischen Bindemitteln, auch bei mineralischen Bindemitteln vermindert wird, welche keinen Zementklinker umfassen, bei dessen Mahlen zu Zement Zusatzmittelzusammensetzung **Z** anwesend war.

Wird die Zusatzmittelzusammensetzung **Z** dem mineralischen Bindemittel nach dem Mahlen des Zementklinkers zugegeben, kann es vorteilhaft sein, die Menge der Zusatzmittelzusammensetzung **Z** zu erhöhen, da im Falle einer Zugabe der Zusatzmittelzusammensetzung **Z** vor/während des Mahlprozesses des Zementklinkers es durch den Mahlprozess zu einer gleichmässigeren und feineren Verteilung der Zusatzmittelzusammensetzung **Z** kommen kann, was die Effektivität im Bezug auf das Vermindern des Aufschwimmen von Russ erhöht.

Mineralischen Bindemitteln werden oft Verflüssiger zugegeben, um den Wasseranspruch zu vermindern und/oder die Verarbeitbarkeit zu verbessern.

Unter dem Begriff "Verflüssiger" werden im vorliegenden Dokument Zusatzmittel, welche den Wasserbedarf zur Herstellung von wässrigen mineralischen Bindemitteln reduzieren und/oder die Verarbeitbarkeit von wässrigen mineralischen Bindemitteln nach Zugabe einer bestimmten Menge an Verflüssiger über eine längere Zeit gewährleisten, im Vergleich zu wässrigen mineralischen Bindemitteln ohne Zugabe von Verflüssiger.

Verflüssiger werden typischerweise zu einem Anteil von 0.2 - 1.5 Gewichts-%, bezogen auf das Gewicht des mineralischen Bindemittels, dem mineralischen Bindemitteln zugesetzt.

Verflüssiger haben jedoch den Nachteil, dass durch die erwirkte Erniedrigung der Fließgrenze das Aufschwimmen von Russ verstärkt wird.

Um das Zusammenhaltevermögen von mineralischen Bindemitteln zu verbessern, werden sogenannte Verdickungsmittel zugegeben, die im Gegensatz zu Fließmitteln die Viskosität des Gesamtsystems erhöhen. Beispiele für gebräuchliche Verdicker sind Stärke- und Cellulosederivate wie z. B. die Methylether (Methylstärke, Methylcellulose) sowie die entsprechenden Mischether, die zusätzlich in unterschiedlichem Ausmaße hydroxypropyliert bzw. hydroxyethyliert sein können (Methylhydroxypropylcellulose, Methylhydroxyethylcellulose).

Nachteilig bei der Anwendung von Verdickungsmitteln zur Suspensionsstabilisierung ist aber, dass die Wirksamkeit mit ausgeprägten Veränderungen der Rheologie und der Konsistenz der mineralischen Bindemitteln, insbesondere mit einer Erhöhung der Fließgrenze und der Viskosität einhergeht. Zusätzlich kommt es je nach Dosierung zu einer unerwünschten Beeinflussung der Abbindeeigenschaften von mineralischen Bindemitteln, die sich in Form von Erstarrungs- und Erhärtungsverzögerungen äussert. Ebenfalls von großem Nachteil ist der durch die Verdickungsmittel in der Regel verursachte Lufteintrag während des Mischvorganges. Die eingebrachten Luftporen erniedrigen die Dichte der mineralischen Bindemitteln und führen deshalb zu reduzierten Druck- und Biegezugfestigkeiten des erhärtenden Baustoffs.

Überraschenderweise hat sich gezeigt, dass durch Zugabe von Zusatzmittelzusammensetzung **Z** zu einer wässrigen mineralischen Bindemittelzusammensetzung der Lufteintrag nicht erhöht wird, was aus der Bestimmung der Druckfestigkeit ersichtlich ist, und das Aufschwimmen von Russ trotzdem vermindert wird. Die Verwendung von Zusatzmittelzusammensetzung **Z** ist daher insbesondere in mineralischen Bindemittelzusammensetzung geeignet, welche Verflüssiger aufweisen.

Weiter ist es von Vorteil, wenn die Zusatzmittelzusammensetzung **Z** mindestens einen Verflüssiger aufweist, welcher ausgewählt ist aus der Gruppe bestehend aus Naphthalinsulfonsäure-Formaldeyd-Harz, Melamin-Formaldehyd-Sulfit-Harz und Kammpolymeren, insbesondere wenn die Zusatzmittelzusammensetzung **Z** dem mineralischen Bindemittel nach dem Mahlen des Zementklinkers zugegeben wird.

Geeignete und bevorzugte Kammpolymere sind jene Kammpolymere, welche vorhergehend als geeignete Kammpolymere für Mahlhilfsmittel erwähnt wurden. Es ist von Vorteil, wenn es sich bei dem Kammpolymer um ein Kammpolymer **KP** mit über Estergruppen an das lineare Polymergerüst gebundenen Seitenketten handelt.

Vorzugsweise beträgt der Anteil an Ligninsulfonat der Zusatzmittelzusammensetzung **Z** 0.0025 - 2 Gewichts-%, insbesondere 0.005 - 0.2 Gewichts-%, bevorzugt 0.005 - 0.1 Gewichts-%, bezogen auf das Gewicht des mineralischen Bindemittels (vor Zugabe des Anmachwassers), insbesondere wenn die Zusatzmittelzusammensetzung **Z** dem mineralischen Bindemittel nach dem Mahlen des Zementklinkers zugegeben wird.

Wird Zusatzmittelzusammensetzung **Z** einem mineralischen Bindemittel nach dem Mahlen des Zementklinkers zugeben, wird nach dessen Abmischung mit Wasser, das heisst im wässrigen mineralischen Bindemittel, insbesondere im Beton, eine Verminderung des Aufschwimmens von Russ auf dem wässrigen mineralischen Bindemittel ersichtlich. Natürlich kann die Zusatzmittelzusammensetzung **Z** auch einem wässrigen mineralischen Bindemittel zugegeben werden. Die Zusatzmittelzusammensetzung **Z** kann auch vermischt mit dem Anmachwasser dem mineralischen Bindemittel zugegeben werden.

Überraschenderweise wurde auch gefunden, dass es für die Verminderung des Aufschwimmens von Russ auf dem wässrigen mineralischen Bindemittel zuträglich ist, das Ligninsulfonat getrennt vom Verflüssiger dem mineralischen Bindemittel zuzugeben.

Überraschenderweise hat sich weiter gezeigt, dass die Zugabe von Zusatzmittelzusammensetzung **Z** keinen negativen Einfluss, beispielsweise eine Erhöhung des Lufteintrags, auf die Druckfestigkeit des abgebundenen mineralischen Bindemittels hat.

Eine mögliche Zusatzmittelzusammensetzung **Z**, welche dem Zementklinker vor und/oder während dem Mahlvorgang zugegeben wird, besteht aus (die Abkürzungen der Zusätze sind untenstehend im Beispielteil weiter ausgeführt):
- **DEG**, 0.005 - 0.02 Gewichts-%, bezogen auf den zu mahlenden Zementklinker und 5 - 50 Gewichts-%, bezogen auf die Zusatzmittelzusammensetzung **Z**;
- **TEA**, 0.005 - 0.02 Gewichts-%, bezogen auf den zu mahlenden Zementklinker und 5 - 50 Gewichts-%, bezogen auf die Zusatzmittelzusammensetzung **Z**;
- **PCE**, 0.005 - 0.02 Gewichts-%, bezogen auf den zu mahlenden Zementklinker und 5 - 50 Gewichts-%, bezogen auf die Zusatzmittelzusammensetzung **Z**;
- **Ligno 1**, 0.005 - 0.02 Gewichts-%, bezogen auf den zu mahlenden Zementklinker und 5-50 Gewichts-%, bezogen auf die Zusatzmittelzusammensetzung **Z**;
- Konservierungsmittel, 0.1 - 0.4 Gewichts-%, bezogen auf die Zusatzmittelzusammensetzung **Z**;
- **TBP**, 0.1 - 0.4 Gewichts-%, bezogen auf die Zusatzmittelzusammensetzung **Z**;

Eine mögliche Zusatzmittelzusammensetzung **Z**, welche dem mineralischen Bindemittel nach dem Mahlen des Zementklinkers zugegeben wird, besteht aus:
- **PCE,** 5 - 94.8 Gewichts-%, bezogen auf die Zusatzmittelzusammensetzung **Z**;
- **Ligno 1**, 5 - 94.8 Gewichts-%, bezogen auf die Zusatzmittelzusammensetzung **Z**;
- Konservierungsmittel, 0.1 - 0.4 Gewichts-%, bezogen auf die Zusatzmittelzusammensetzung **Z**;
- **TBP**, 0.1 - 0.4 Gewichts-%, bezogen auf die Zusatzmittelzusammensetzung **Z**;

In einem weiteren Aspekt betrifft die vorliegende Erfindung ein Verfahren zur Verminderung des Aufschwimmens von Russ auf mineralischen Bindemitteln umfassend den Schritt:
a) Zugabe einer Zusatzmittelzusammensetzung **Z**, umfassend mindestens ein Ligninsulfonat, zu einem mineralischen Bindemittel.

Geeignete und bevorzugte Russe, mineralische Bindemittel und Ligninsulfonate entsprechen den im Dokument vorhergehend erwähnten.

Es ist weiter vorteilhaft, wenn die Zusatzmittelzusammensetzung **Z**, im vorhergehend erwähnten Verfahren, mindestens einen Verflüssiger aufweist, welcher ausgewählt ist aus der Gruppe bestehend aus Naphthalinsulfonsäure-Formaldeyd-Harz, Melamin-Formaldehyd-Sulfit-Harz und Kammpolymeren.

Die Zusatzmittelzusammensetzung **Z** kann einem mineralischen Bindemittel vor oder nach dessen Abmischung mit Wasser, das heisst dem wässrigen mineralischen Bindemittel, zugegeben werden. Die Zusatzmittelzusammensetzung **Z** kann auch vermischt mit dem Anmachwasser dem mineralischen Bindemittel zugegeben werden.

Eine zeitlich getrennte Zugabe vom mindestens einen Ligninsulfonat und vom mindestens einen Verflüssiger zum mineralischen Bindemittel ist dahingehend von Vorteil, dass sich dadurch eine bessere Performance von Ligninsulfonat und Verflüssiger ergibt, insbesondere wenn es sich beim Verflüssiger um ein Kammpolymer handelt. Weiter ist auch im Fall, wo die Zusatzmittelzusammensetzung **Z** vermischt mit dem Anmachwasser dem mineralischen Bindemittel zugegeben wird, eine zeitlich getrennte Zugabe vom mindestens einen Ligninsulfonat und vom mindestens einen Verflüssiger zum Anmachwasser des mineralischen Bindemittels vorteilhaft.

In einem weiteren Aspekt betrifft die vorliegende Erfindung ein Verfahren zur Verminderung des Aufschwimmens von Russ auf mineralischen Bindemitteln umfassend den Schritt:
a') Zugabe einer Zusatzmittelzusammensetzung **Z**, umfassend mindestens ein Ligninsulfonat, vor und/oder während dem Mahlvorgang von Zementklinker, welcher im mineralischen Bindemittel enthalten ist, wobei der Anteil an Ligninsulfonat der Zusatzmittelzusammensetzung **Z** 0.001 - 1.5 Gew.-%, insbesondere zwischen 0.005 und 0.2 Gewichts-%, bevorzugt zwischen 0.005 und 0.08 Gewichts-%, bezogen auf den zu mahlenden Zementklinker, beträgt. Geeignete und bevorzugte Russe, mineralische Bindemittel und Ligninsulfonate entsprechen den im Dokument vorhergehend erwähnten.

Es ist weiter vorteilhaft, wenn die Zusatzmittelzusammensetzung **Z** im vorhergehend erwähnten Verfahren mindestens ein Zementmahlhilfsmittel aufweist, welches insbesondere ausgewählt ist aus der Gruppe bestehend aus Glykole, organische Amine, Ammoniumsalze von organischen Aminen mit Carbonsäuren und Kammpolymeren, wie sie als geeignet und bevorzugt im Dokument vorhergehend erwähnt wurden.

Eine zeitlich getrennte Zugabe vom mindestens einen Ligninsulfonat und vom mindestens einen Zementmahlhilfsmittel zum Zementklinker, welcher im mineralischen Bindemittel enthalten ist, ist dahingehend von Vorteil, dass sich dadurch eine bessere Performance von Ligninsulfonat und Zementmahlhilfsmittel ergibt, insbesondere wenn es sich beim Zementmahlhilfsmittel um ein Kammpolymer handelt.

### Beispiele

Die Erfindung wird nun anhand von Beispielen näher erläutert.

### Verwendete Zusätze

| **Name** | **Hersteller** |
|---|---|
| Triisopropanolamin **(TIPA)** | BASF SE, Deutschland |
| Diethylenglykol **(DEG)** | Hansa Chemie AG, Schweiz |
| Kammpolymer, mit über Estergruppen an Polymergerüst gebundenen Seitenketten **(PCE)**, Sika ViscoCrete®-20 HE | Sika Schweiz AG, Schweiz |
| Triethanolamin **(TEA)** | BASF SE, Deutschland |
| **Tributyl phosphat (TBP)** (Entschäumer) | Sigma-Aldrich Chemie GmbH, Schweiz |
| Calcium Ligninsulfonat **(Ligno 1)**, Borrement Ca 124 | Borregaard Deutschland GmbH, Deutschland |
| Magnesium Ligninsulfonat **(Ligno 2),** COLLEX 50 S5 | Chemische Werke Zell-Wildshausen GmbH, Deutschland |
| Natrium Ligninsulfonat **(Ligno 3)**, Borrement Na 224 | Borregaard Deutschland GmbH, Deutschland |

Die Zusatzmittel V1 bis V4 (Vergleichsbeispiele) und Z1 bis Z10 (erfindungsgemässe Beispiele) wurden im Mahlprozess eingesetzt.

Die Zusatzmittel wurden entsprechend den Mengen in Tabelle 1 dem zu mahlenden Zementklinker kurz von dem Mahlen zugeben.

**Tabelle 1 *Menge in Gew.-% bezieht sich auf den zu mahlenden Zementklinker**

| **Zusatzmittel** | **Name Zusatz** | **Menge (g)** | **Menge (Gew.-%)*** |
|---|---|---|---|
| V1 | **TIPA** | 8 g | 0,04 |
| V2 | **DEG** | 8 g | 0,04 |
| V3 | **PCE** | 8 g | 0,04 |
| V4 | **PCE** | 4 g | 0,02 |
| | **TIPA** | 4 g | 0,02 |
| Z 1 | **Ligno 1** | 2 g | 0,01 |
| Z 2 | **Ligno 2** | 2 g | 0,01 |
| Z 3 | **Ligno 1** | 4 g | 0,02 |
| | **TIPA** | 4 g | 0,02 |
| Z 4 | **Ligno 1** | 4 g | 0,02 |
| | **DEG** | 4 g | 0,02 |
| Z 5 | **Ligno 1** | 4 g | 0,02 |
| | **PCE** | 4 g | 0,02 |
| Z 6 | **Ligno 1** | 2 g | 0,01 |
| | **PCE** | 4 g | 0,02 |
| | **TIPA** | 4 g | 0,02 |
| Z 7 | **Ligno 2** | 4 g | 0,02 |
| | **TIPA** | 4 g | 0,02 |
| Z 8 | **Ligno 2** | 4 g | 0,02 |
| | **DEG** | 4 g | 0,02 |
| Z 9 | **Ligno 2** | 4 g | 0,02 |
| | **PCE** | 4 g | 0,02 |
| Z 10 | **Ligno 2** | 2 g | 0,01 |
| | **PCE** | 4 g | 0,02 |
| | **TIPA** | 4 g | 0,02 |

### Verwendeter Zementklinker

Der verwendete Zementklinker bestand zu 63% aus C3S, zu 18% aus C2S, zu 11 % aus C3A und zu 8% aus C4AF.

### Mahlen des Zementklinkers

20 kg einer Mischung des jeweiligen Zementklinkers und einem der jeweiligen Zusatzmittel, beziehungsweise ohne Zusatzmittel, wurden in der oben angegebenen Dosierung vermengt und in einer Trommelkugelmühle der Firma Siebtechnik bei einer Temperatur von 100°C, bei einer Rotationsgeschwindigkeit von 40 Umdrehungen pro Minute, ca. 100 Minuten gemahlen.

### Prüfmethoden

- Mahldauer₄₅₀₀ : Es wurde die Zeit bestimmt, bis die Mischung nach einem Mahlen in der Kugelmühle eine Blaine-Feinheit nach DIN EN 196-6 von 4500 cm²/g aufwies.
- Feinheit: Die Feinheit wurde nach Blaine mittels Blaine Automat der Firma Wasag Chemie bestimmt.

### Bewertung Mahleffizienz

(+), Mahlzeit zum Erreichen einer Blaine-Feinheit von 4500 cm²/g ≤90% der Mahlzeit zum Erreichen einer Blaine-Feinheit von 4500 cm²/g ohne Zusatzmittel (B1)
(+/-), Mahlzeit zum Erreichen einer Blaine-Feinheit von 4500 cm²/g ≤95% der Mahlzeit zum Erreichen einer Blaine-Feinheit von 4500 cm²/g ohne Zusatzmittel (B1)
(-), Mahlzeit zum Erreichen einer Blaine-Feinheit von 4500 cm²/g ≥100% der Mahlzeit zum Erreichen einer Blaine-Feinheit von 4500 cm²/g ohne Zusatzmittel (B1)

Die Resultate sind in Tabelle 2 ersichtlich.

Weiter wurde das Aufschwimmen von Russ auf einem Mörtel enthaltend einen so gemahlenen Zement bestimmt.

| Zusammensetzung der Mörtelmischung: | Menge in g |
|---|---|
| Normmörtel nach EN 196-1 | |
| Zement, erhalten in den obenstehenden Mahlversuchen (enthaltend 4% Flugasche) | 450 |
| Leitungswasser | 225 |
| Normsand 0-4 mm | 1350 |

Als Zement wurde der in den obenstehenden Mahlversuchen erhaltene Zement verwendet. Er hatte eine Feinheit nach Blaine von ca. 4500 cm²/g

Der Mörtel wurde nach EN 196-1 hergestellt und in die Formen eingebracht und verdichtet.

Nach dem Verdichten (nach EN 196-1 auf einem Vibrationstisch) wurde das Aufschwimmen der schwarzen Partikel (Russ) optisch bewertet.
Keine Partikel erkennbar = (+)
Wenige Partikel erkennbar = (+/-)
Deutlich Partikel erkennbar = (-)

Die Resultate sind in Tabelle 2 ersichtlich.

**Tabelle 2**

| Nr. | Zusatzmittel (Gew-%) | **Mahleffizienz** | **Aufschwimmen RuSS** |
|---|---|---|---|
| B1 | kein Zusatzmittel | (-) | (-) |
| B2 | **V1 (TIPA)** | (+) | (-) |
| B3 | **V2 (DEG)** | (+) | (-) |
| B4 | **V3 (PCE)** | (+) | (-) |
| B5 | **V4 (PCE)/ (TIPA)** | (+) | (-) |
| B6 | **Z1 (Ligno1)** | (+/-) | (+) |
| B7 | **Z2 (Ligno2)** | (+/-) | (+) |
| B8 | **Z3 (Ligno1)/TIPA** | (+) | (+/-) |
| B9 | **Z4 (Ligno1 )/DEG** | (+) | (+) |
| B10 | **Z5 Ligno1)/PCE** | (+) | (+) |
| B11 | **Z6 (Ligno1)/PCE/ TIPA** | (+) | (+/-) |
| B12 | **Z7 (Ligno2)/TIPA** | (+) | (+/-) |
| B13 | **Z8 (Ligno2)/DEG** | (+) | (+) |
| B14 | **Z9 (Ligno2)/PCE** | | |
| B15 | **Z10 (Ligno2)/PCE/ TIPA** | (+) | (+/-) |

Zur weiteren Bestimmung der Wirksamkeit der Zusatzmittel Z11 bis Z14 (erfindungsgemässe Beispiele) wurden Mörtelmischungen mit den verschiedenen Zusatzmitteln versetzt (siehe Tabelle 3).

**Tabelle 3 *Menge in Gew.-% bezieht sich auf die Mörtelmischung vor Zugabe des Wassers**

| **Zusatzmittel** | **Name Zusatz** | **Menge (Gew.-%)*** |
|---|---|---|
| Z 11 | **Ligno 1** | 0,05 |
| Z 12 | **Ligno 2** | 0,05 |
| Z 13 | **Ligno 3** | 0,05 |
| Z 14 | **Ligno 2** | 0,017 |
| | **DEG** | 0,017 |
| | **PCE** | 0,017 |

Die Mörtelmischung wurde mit CEM II A-LL 42,5 mit 5 % Flugasche hergestellt. Die Feinheit der Mörtelmischung betrug nach Blaine (EN 196-6) ca. 4500 cm²/g. Die verschiedenen Zusatzmittel aus Tabelle 3 wurden den Mörtelmischungen mit dem Anmachwasser zugegeben. Die Mischung erfolgte nach EN 196-1. Die angegebenen Mengen in Gew.-% beziehen sich das mineralische Bindemittel vor Zugabe des Anmachwassers, in diesem Fall auf die Mörtelmischung vor Zugabe des Wassers.

Von den erhaltenen Mörtelmischungen wurden die Druckfestigkeit sowie das Aufschwimmen von Russ gemessen (siehe Tabelle 4).

Die Prüfung zur Bestimmung der Druckfestigkeit (in N/mm²) an Prismen (40 x 40 x 160 mm) nach 1 Tag, 2 Tagen, 7 Tagen und 28 Tagen erfolgte nach EN 196-1.

Zur Bestimmung des Aufschwimmens von Russ wurde der Mörtel in Formen eingebracht, verdichtet (nach EN 196-1 auf einem Vibrationstisch) und nach dem Verdichten wurde das Aufschwimmen von schwarzen Partikeln (Russ) optisch bewertet.
Keine Partikel erkennbar = (++)
Wenige Partikel erkennbar = (+)
Deutlich Partikel erkennbar = (-)

**Tabelle 4: Druckfestigkeiten in N/mm² nach 1, 2, 7 und 28 Tagen (d) und Aufschwimmen von schwarzen Partikeln (Russ).**

| **Nr.** | **Zusatz -mittel** | **Druckfestigkeit** | | | | **Aufschwimmen** |
|---|---|---|---|---|---|---|
| | | Nach 1 d | Nach 2 d | Nach 7 d | Nach 28 d | |
| B16 | kein Zusatzmittel | 12,2 | 24,4 | 34,6 | 41,7 | (-) |
| B17 | **Z11** | 11,6 | 24,7 | 33,5 | 41,0 | (+ +) |
| B18 | **Z12** | 11,2 | 24,4 | 33,2 | 41,4 | (+ +) |
| B19 | **Z13** | 11,2 | 24,9 | 33,3 | 41,2 | (+ +) |
| B20 | **Z14** | n.a. | n.a. | n.a. | n.a. | (+) |

## Patentansprüche

1. Verwendung einer Zusatzmittelzusammensetzung **Z** umfassend mindestens ein Ligninsulfonat zur Verminderung des Aufschwimmens von Russ auf mineralischen Bindemitteln, wobei es sich bei mineralischen Bindemitteln um hydraulische Bindemittel und/oder latent hydraulische und/oder puzzolanische Bindemittel handelt, welche insbesondere ausgewählt sind aus der Gruppe bestehend aus Zement, Flugaschen, Silica fume, Trass, Reisschalenasche und Hüttensand; oder Mischungen daraus.

2. Verwendung gemäss Anspruch 1, **dadurch gekennzeichnet, dass** der Gewichtsanteil des Russes 0.05 - 1.75 Gewichts-%, insbesondere 0.1 - 1 Gewichts-%, bezogen auf das Gewicht des mineralischen Bindemittels, beträgt.

3. Verwendung gemäss einem der vorhergehenden Ansprüche, **dadurch gekennzeichnet, dass** der Russ eine mittlere Partikelgrösse von 50 - 200 µm, insbesondere 70-150 µm, bevorzugt 90-120 µm und/oder eine spezifische Oberfläche, BET nach DIN 66 131, von 1 - 20 m²/g, insbesondere 5-15 m²/g aufweist.

4. Verwendung gemäss einem der vorhergehenden Ansprüche, **dadurch gekennzeichnet, dass** das mineralische Bindemittel gemahlenen Zementklinker umfasst, bei dessen Mahlen zu Zement Zusatzmittelzusammensetzung **Z** anwesend war.

5. Verwendung gemäss Anspruch 4, **dadurch gekennzeichnet, dass** die Zusatzmittelzusammensetzung **Z** dem Zementklinker vor und/oder während dem Mahlvorgang so zugegeben wird, dass der Anteil an Ligninsulfonat der Zusatzmittelzusammensetzung **Z** 0.001 - 1.5 Gew.-%, insbesondere zwischen 0.005 und 0.2 Gewichts-%, bevorzugt zwischen 0.005 und 0.08 Gewichts-%, bezogen auf den zu mahlenden Zementklinker, beträgt.

6. Verwendung gemäss einem der vorhergehenden Ansprüche, **dadurch gekennzeichnet, dass** die Zusatzmittelzusammensetzung **Z** mindestens ein Zementmahlhilfsmittel aufweist, welches insbesondere ausgewählt ist aus der Gruppe bestehend aus Glykole, organische Amine, Ammoniumsalze von organischen Aminen mit Carbonsäuren und Kammpolymeren.

7. Verwendung gemäss einem der Ansprüche 1 - 3, **dadurch gekennzeichnet, dass** die Zusatzmittelzusammensetzung **Z** mindestens einen Verflüssiger aufweist welcher ausgewählt ist aus der Gruppe bestehend aus Naphthalinsulfonsäure-Formaldeyd-Harz, Melamin-Formaldehyd-Sulfit-Harz und Kammpolymeren.

8. Verwendung gemäss Anspruch 7, **dadurch gekennzeichnet, dass** es sich bei dem Kammpolymer um ein Kammpolymer **KP** mit über Estergruppen an das lineare Polymergerüst gebundenen Seitenketten handelt.

9. Verwendung gemäss einem der Ansprüche 7 oder 8, **dadurch gekennzeichnet, dass** der Anteil an Ligninsulfonat der Zusatzmittelzusammensetzung **Z** 0.0025 - 2 Gewichts-%, insbesondere 0.005 - 0.2 Gewichts-%, bevorzugt 0.005 - 0.1 Gewichts-%, bezogen auf das Gewicht des mineralischen Bindemittels, beträgt.

10. Verfahren zur Verminderung des Aufschwimmens von Russ auf mineralischen Bindemitteln umfassend den Schritt:
a) Zugabe einer Zusatzmittelzusammensetzung **Z**, umfassend mindestens ein Ligninsulfonat, zu einem mineralischen Bindemittel.

11. Verfahren gemäss Anspruch 10, **dadurch gekennzeichnet, dass** die Zusatzmittelzusammensetzung **Z** mindestens einen Verflüssiger aufweist, welcher ausgewählt ist aus der Gruppe bestehend aus Naphthalinsulfonsäure-Formaldeyd-Harz, Melamin-Formaldehyd-Sulfit-Harz und Kammpolymeren.

12. Verfahren gemäss Anspruch 11, **dadurch gekennzeichnet, dass** das mindestens eine Ligninsulfonat zeitlich getrennt vom mindestens einen Verflüssiger dem mineralischen Bindemittel zugegeben wird.

13. Verfahren zur Verminderung des Aufschwimmens von Russ auf mineralischen Bindemitteln umfassend den Schritt:
a') Zugabe einer Zusatzmittelzusammensetzung **Z**, umfassend mindestens ein Ligninsulfonat, vor und/oder während dem Mahlvorgang von Zementklinker, welcher im mineralischen Bindemittel enthalten ist, wobei der Anteil an Ligninsulfonat der Zusatzmittelzusammensetzung **Z** 0.001 - 1.5 Gew.-%, insbesondere zwischen 0.005 und 0.2 Gewichts-%, bevorzugt zwischen 0.005 und 0.08 Gewichts-%, bezogen auf den zu mahlenden Zementklinker, beträgt.

14. Verfahren gemäss Anspruch 13, **dadurch gekennzeichnet, dass** die Zusatzmittelzusammensetzung **Z** mindestens ein Zementmahlhilfsmittel aufweist, welches insbesondere ausgewählt ist aus der Gruppe bestehend aus Glykole, organische Amine, Ammoniumsalze von organischen Aminen mit Carbonsäuren und Kammpolymeren.

15. Verfahren gemäss Anspruch 14, **dadurch gekennzeichnet, dass** das mindestens eine Ligninsulfonat zeitlich getrennt vom mindestens einen Zementmahlhilfsmittel dem Zementklinker, welcher im mineralischen Bindemittel enthalten ist, zugegeben wird.
